# EUROPÄISCHE PATENTSCHRIFT

(11) **EP 2 047 736 B1**
(45) Veröffentlichungstag und Bekanntmachung des Hinweises auf die Patenterteilung: **16.03.2016**
(21) Anmeldenummer: 08017525.0
(22) Anmeldetag: 07.10.2008
(51) Int. Cl.: A01C 9/00, A01C 7/10

(54) **Legemaschine für Kartoffeln**
Planter for potatoes
Plieuse pour pommes de terre

(30) Priorität: 10.10.2007 DE 102007048637
(43) Veröffentlichungstag der Anmeldung: 15.04.2009
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Pott, Ulrich

(56) Entgegenhaltungen:
- EP-A- 1 277 388
- EP-A- 1 297 734
- DE-A1- 3 046 945
- DE-A1- 3 103 125
- DE-U1- 9 318 225
- GB-A- 1 330 198

## Beschreibung

Die Erfindung betrifft eine Legemaschine für Kartoffeln gemäß dem Oberbegriff des Anspruchs 1.

Bekannte Kartoffellegemaschinen weisen im Bereich eines Saatgut-Knollen enthaltenden Vorratsbehälters eine mit Austragelementen versehene Fördervorrichtung auf, womit die Knollen aus dem Vorratsbehälter entnommen, dabei vereinzelt und in eine vorgeformte Furche eingelegt werden. Eine derartige Konstruktion ist auch bei einer vom Anmelder hergestellten Kartoffellegemaschine vom Typ GLK 34 K (Veröffentlichung: Deutsche Landwirtschaftsgesellschaft, 1999, DLG-Prüfbericht 4824) vorgesehen. Beim Einsatz dieser Legemaschinen hat es sich gezeigt, dass insbesondere bei Fahrbewegungen in hängigem Gelände der Verlegevorgang nachteilig beeinflusst ist. Da die beim Zuführvorgang rollfähigen Knollen jeweiligen Schräglagen der Maschine folgende Bewegungen ausführen, können Fehlstellen und/oder Mehrfachbelegungen in der Furche entstehen.

Gemäß DE 22 41 945 und DE 25 48 359 wird eine Einrichtung zur Kontrolle der Tätigkeit einer Kartoffellegemaschine vorgeschlagen, wobei der Vorratsbehälter mit einem Schwingboden ausgeführt ist, um die Knollenzufuhr zu überwachen und mittels eines Frequenzgebers ein optisches oder akustisches Fehlersignal für die Bedienperson bereitzustellen. Bei einer Vorrichtung gemäß DE 29 45 923 werden im Becherelevator jeweilige Leer-Becher durch einen Fühler erfasst und der Bedienperson signalisiert, so dass dieser den Ackerschlepper anhalten muss und die Leerstelle verursachende Störungen zu beseitigen sind. Eine gemäß G 93 18 225.2 vorgesehene Kartoffellegemaschine weist zur Geschwindigkeitsänderung am die Knollen zuführenden Becherschöpfwerk bzw. Gurtsystem einen Drehzahlmesser auf, mit dem die Soll- und Ist-Drehzahlen erfasst und mittels eines Rechners sowie einer Stelleinheit im Bereich eines Hydromotors anpassbar sind.

In DE 30 46 945 ist eine Kartoffellegemaschine vorgesehen, die im Bereich der Bandlegeeinrichtung nur einen Neigungsfühler aufweist, so dass diese als Becherförderer ausgebildete Einrichtung auf dem Maschinenrahmen mittels eines Arbeitszylinders in die senkrechte Richtung kippbar ist. Damit wird ein steuerbarer Legevorgang realisiert, wobei lediglich ein allgemein angesprochener elektronischer Messwertgeber als Einzelbaugruppe genutzt wird.

Gemäß EP 1 277 388 A1 wird ein Mähdrescher als eine zur Feldarbeit geeignete Fabrik ausgerüstet, wobei beginnend mit der Aufnahme von Erntegut die Bewertung des Komes erfolgt. Dieses Konzept ist nicht mit einer Kartoffellegemaschine vergleichbar.

Bei einer Konstruktion gemäß GB 1330198 wird eine einfache Kanal-Überwachung an einer Kartoffellegemaschine vorgeschlagen, in DE 31 03 125 A1, woraus der Oberbegriff von Anspruch 1 entnehmbar ist wird eine Fehlererkennung im Bereich von sich kreuzenden Förderbändern durchgeführt, aus EP 1 297 734 A1 ist eine Erntemaschine mit Neigungsmessung zur Geschwindigkeitsregelung zu entnehmen, und in DE 93 18 225 U1 wird im Bereich eines Stützrades einer Legemaschine eine Drehzahlsynchronisation für den Becherförderer realisiert.

Die Erfindung befasst sich mit dem Problem, eine Legemaschine für Kartoffeln zu schaffen, die im Bereich funktionaler Baugruppen zur Knollenzuführung mit geringerem Aufwand bedienbar sowie einfacher kontrollierbar ist und einen verbesserten Verlegevorgang mit geringerer Störanfälligkeit auf geneigten Arbeitsflächen sowohl bei Band- als auch bei Becherförderern ermöglicht.

Die Erfindung löst diese Aufgabe mit einer Legemaschine mit den Merkmalen des Anspruchs 1. Hinsichtlich weiterer Ausgestaltungen wird auf die Ansprüche 2 bis 18 verwiesen.

Die Legemaschine für Kartoffeln weist erfindungsgemäß ein Antriebskonzept auf, bei dem zumindest in den Bereich der Saatgut-Knollen aufnehmenden und ausfördemden Baugruppen eine komplexe Regelungseinheit integriert ist. Dabei wird die optimale Vereinzelung der Knollen mittels mehrerer Sensoren überwacht, durch deren Rückkoppelung zu einer Steuereinheit können Neigungslagen und Fehlbelegungen erkannt werden und diese sind mittels jeweiliger Aktoren sofort ausgleichbar, so dass damit eine anzahl- und abstandsgerechte Verlegung der Knollen mit erhöhter Zuverlässigkeit durchführbar wird.

Für diese automatische Überwachung sowohl der Aufnahme- als auch der Verlegefunktionen sind an Legemaschinen für Kartoffeln weitgehend beliebige Sensor-Aktor-Konstruktionen ausrüstbar. Die erfindungsgemäße Regelungseinheit ist so aufgebaut, dass ein direktes Einwirken auf die vorhandenen Zuführglieder, beispielsweise Förderbänder oder Becherförderer, möglich ist und mittels entsprechender Sensoren-Paarungen und komplexer Steuerprogramme eine optimale Regelung möglich ist. Damit ist ein bisher erforderliches Eingreifen einer Bedienperson in dieses automatische und sich weitgehend selbst optimierende System an Kartoffellegemaschinen entbehrlich. Dieses Kontrollsystem kann dabei über die zumindest zwei Sensoren hinaus so erweitert werden, dass entsprechend der Verlegedynamik eine variable Anpassung jeweiliger Stellparameter an die Umgebung möglich ist und während des Legevorgangs nach Art einer adaptiven Regelung sowohl die Lageänderungen als auch die Fehlbelegungen im Zuführbereich der Knollen ausgleichbar sind.

Weitere Einzelheiten und vorteilhafte Ausgestaltungen der Erfindung ergeben sich aus der nachfolgenden Beschreibung und den Zeichnungen, die mehrere Ausführungsbeispiele der erfindungsgemäßen Legemaschine für Kartoffeln zeigen. In der Zeichnung zeigen:
- Fig. 1: eine Prinzipdarstellung einer Legemaschine gemäß dem Stand der Technik mit einem Becherbandförderer,
- Fig. 2: eine Prinzipdarstellung ähnlich Fig. 1 mit der einen Bandförderer als Förderbaugruppe aufweisenden Legemaschine auf abfallender Arbeitsfläche,
- Fig. 3: eine Prinzipdarstellung ähnlich Fig. 2 mit der Legemaschine auf einer ebenen Arbeitsfläche,
- Fig. 4: eine Prinzipdarstellung ähnlich Fig. 3 mit der Legemaschine auf einer ansteigenden Arbeitsfläche,
- Fig. 5: eine vergrößerte Ausschnittsdarstellung der Legemaschine ähnlich Fig. 2 mit einer in deren Baugruppen integrierten Regelungseinheit mit einem Neigungssensor,
- Fig. 6: eine Prinzipdarstellung ähnlich Fig. 1 mit der den Becherbandförderer aufweisenden Legemaschine auf der abfallenden Arbeitsfläche,
- Fig. 7: eine vergrößerte Ausschnittsdarstellung des Becherbandförderers gemäß Fig. 6,
- Fig. 8: eine Prinzipdarstellung ähnlich Fig. 6 mit der Legemaschine auf der ansteigenden Arbeitsfläche,
- Fig. 9: eine vergrößerte Ausschnittsdarstellung des Becherbandförderers gemäß Fig. 8,
- Fig. 10 und Fig. 11: die Legemaschine mit dem Becherbandförderer auf einer horizontalen Arbeitsfläche, und
- Fig. 12: eine vergrößerte Ausschnittsdarstellung des Becherbandförderers mit der einen optischen Sensor aufweisenden Regelstrecke.

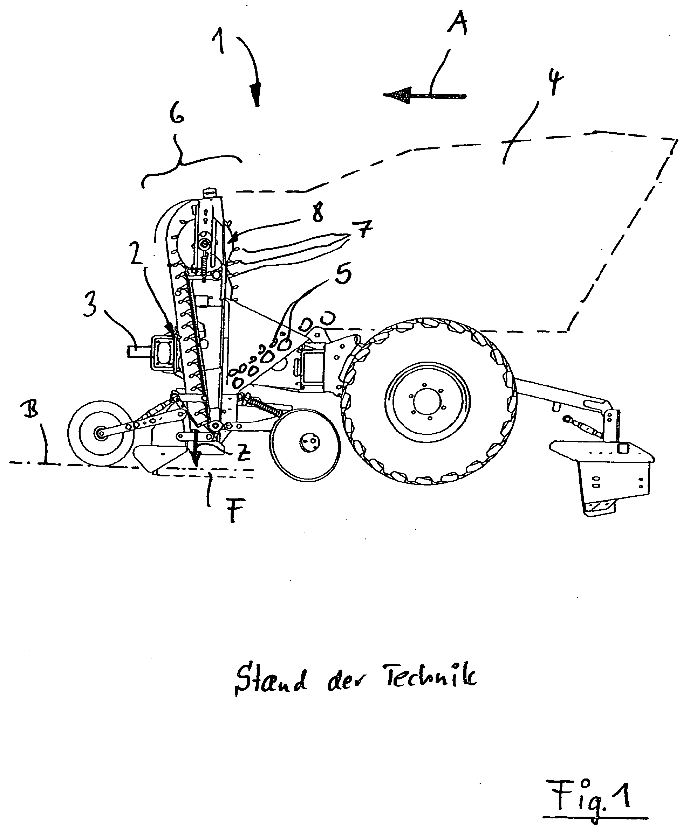

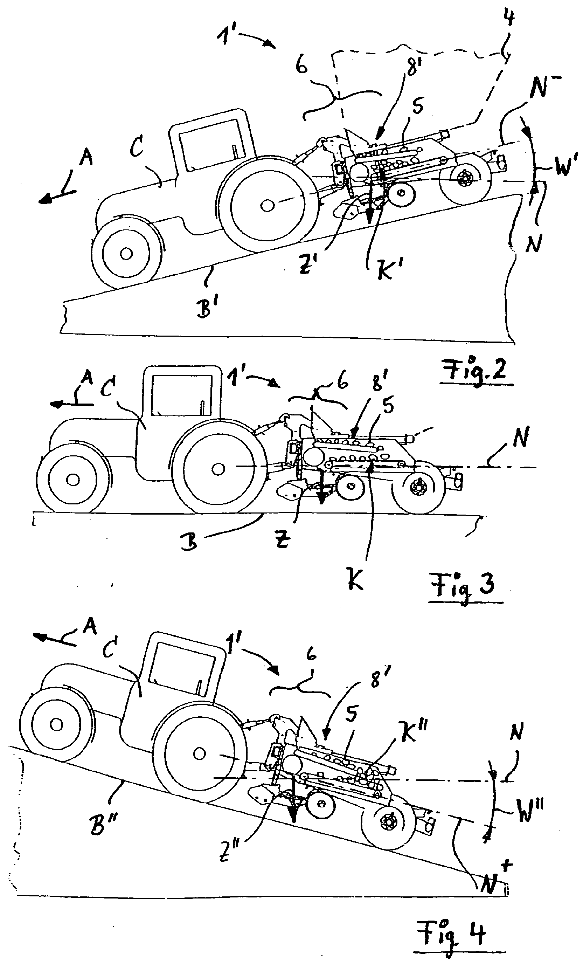

In Fig. 1 ist eine Prinzipdarstellung einer insgesamt mit 1 bezeichneten Legemaschine für Kartoffeln gezeigt, die in einer gezogenen Ausführung von einem nicht näher dargestellten Zugfahrzeug C erfassbar ist (Fig. 2). Dieses kann insbesondere im Bereich einer mit dem Maschinenrahmen 2 verbundenen Anhängevorrichtung 3 mit der Maschine 1 so verbunden werden, dass deren Verlagerung in einer Arbeitsrichtung gemäß Pfeil A möglich ist. Für einen zumindest einreihigen Legevorgang ist im Bereich des Maschinenrahmens 2 eine mit einem Vorratsbehälter 4 für Knollen 5 zusammenwirkende Vereinzelungsvorrichtung 6 gehalten. Bei dem in Fig. 1 nicht näher dargestellten Legevorgang werden mittels einer umlaufende Bänder, Becher o. dgl. Austragelemente 7 aufweisenden Förderbaugruppe 8 jeweilige Knollen 5 aus dem Vorratsbehälter 4 erfasst und einzeln einer im Ackerboden B geformten Furche F zugeführt (Pfeil Z).

In Fig. 2 bis 4 ist eine zweite Ausführung der Legemaschine 1' bekannter Ausführung dargestellt, wobei diese im Bereich der Vereinzelungsvorrichtung 6 mit einer eine Bandförderung aufweisenden Förderbaugruppe 8' versehen ist. Ausgehend von der in Fig. 3 ersichtlichen, durch eine zum Ackerboden B parallele Neigungslinie N gezeigten "Normallage" des Systems beim Legevorgang sind in Fig. 2 und 4 denkbare Abweichungen dargestellt. In Fig. 2 befindet sich das System auf einem als Arbeitsfläche wirksamen Ackerboden B', der eine mit dem Winkel N- dargestellte, nach links abfallende Neigung aufweist. Der entgegengesetzte Anwendungsfall, nämlich eine Steigung mit einem Winkel N⁺, ist in Fig. 4 gezeigt. In diesen von der Normallage N abweichenden Gebrauchsstellungen kann der Verlegevorgang dadurch gestört sein, dass die Knollen 5 in Abweichung zu ihrer mit K in Fig. 3 dargestellten normalen Abstandslage im Bereich der Förderbaugruppe 8' jeweilige mit K' und K" dargestellte, in oder entgegen der Fahrtrichtung gerichtete "Anhäufungen" im Bereich der Förderstrecke bilden und damit der Zuführvorgang Z gestört ist (Pfeil Z', Z").

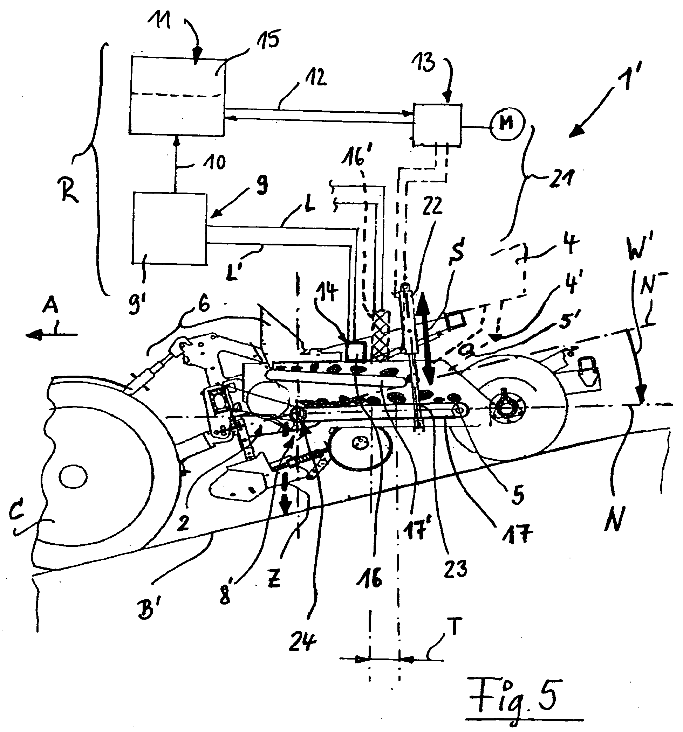

In Fig. 5 ist eine Prinzipdarstellung des erfindungsgemäßen Konzeptes der Legemaschine 1' dargestellt, wobei zumindest deren die Knollen 5 aufnehmende Förderbaugruppe 8' bei sich ändernden Aufnahme- und/oder Verlegeparametern, beispielsweise die Winkellage N- gemäß Fig. 2, weitgehend automatisch in einen verlegeoptimalen Sollzustand (Fig. 3) überführbar ist.

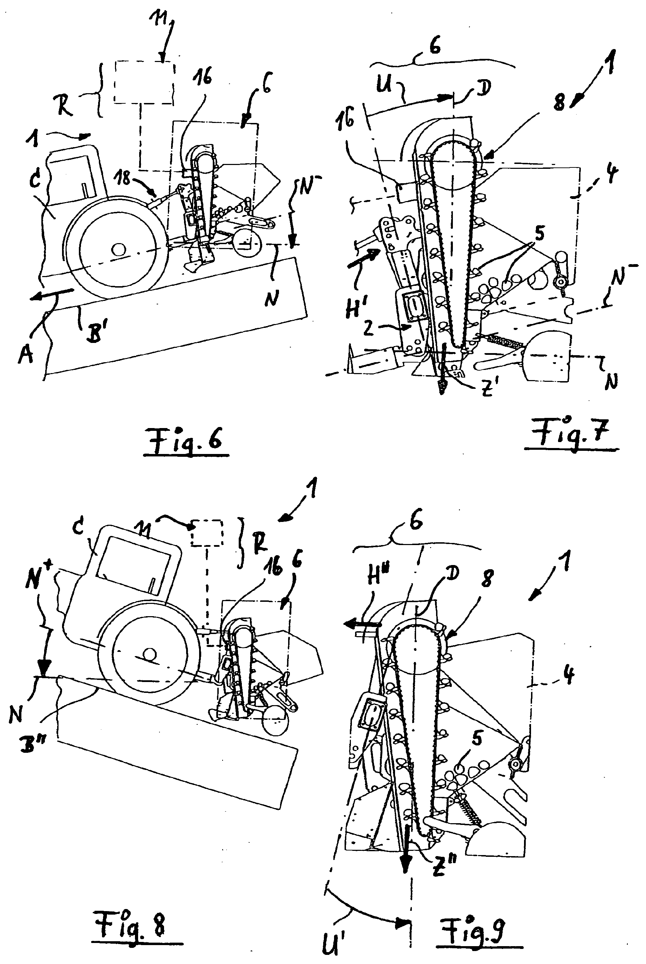

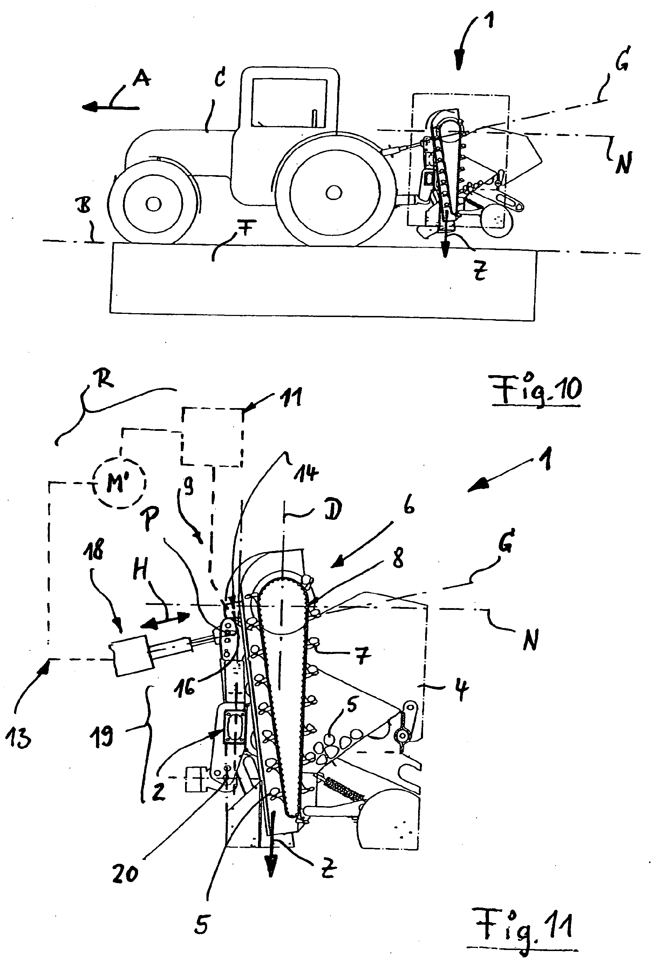

Dazu ist im Bereich der Legemaschine 1' (bzw. 1; Fig. 6 bis Fig. 12) zumindest eine die jeweiligen Aufnahme- und/oder Verlegeparameter erfassende und Abweichungen vom Sollzustand korrigierende Regelungseinheit R vorgesehen. Diese Regelungseinheit R wirkt dabei mit zumindest einem insgesamt mit 9 bezeichneten Sensor zusammen, dessen Ausgangssignal 10 einem Steuergerät 11 zuführbar ist (Fig. 5). Damit wird ein elektronisches Ausgangssignal 12 zur Betätigung eines Stellorgans 13 im Bereich der Legemaschine 1' aktiviert (Maschine 1, Fig. 11). Es versteht sich, dass der insgesamt mit 9 bezeichnete Sensor mit weitgehend beliebigen Ausführungen von in die Legemaschine bzw. deren Baugruppen integrierbaren Messwertgebern 14 versehen sein kann, wobei diese bzw. deren Elektronikteil 9' über Leitungen L, L' bzw. über Funk mit dem Steuergerät 11 verbindbar sind.

Mittels der Regelungseinheit R bzw. dem insgesamt mit 13 bezeichneten Stellorgan können jeweilige für den Aufnahme- und Verlegevorgang vorgebbare Soll-Zustände bzw. -Parameter der Maschine 1, 1' und/oder einzelner deren Baugruppen, beispielsweise der Vereinzelungsvorrichtung 6 und/oder der Förderbaugruppe 8 bzw. 8', automatisch korrigiert werden. Ebenso ist denkbar, an der Maschine 1,1' mehrere jeweils einen elektronischen Messwertgeber 14 aufweisende Sensoren 9 vorzusehen, wobei diese mit der einen Regelungseinheit R verbunden sind (Fig. 5: Neigungsmesser 16; Anwesenheitssensor 16').

Für den Aufbau der Regelungsstrecke R ist vorgesehen, dass die jeweiligen elektronischen Ausgangssignale der Messwertgeber 14 bzw. des jeweiligen Sensors 9 mittels eines programmierbaren Speichers, eines integrierten Computers o. dgl. Zusatzbaugruppen 15 in der Regelungseinheit R bzw. in deren Steuergerät 11 verarbeitbar sind.

Ausgehend von den in Fig. 2 und Fig. 4 gezeigten Verlegephasen mit steigender bzw. fallender Arbeitsfläche N⁺, N⁻ ist in Fig. 5 die erfindungsgemäß verbesserte Legemaschine 1' dargestellt, wobei diese mit zumindest einem elektronischen Neigungsmesser 16 als der direkte Messwertgeber 14 versehen ist. In Zusammenschau mit der vorbeschriebenen Regelungsstrecke R wird deutlich, dass mittels des vom Neigungsmesser 16 erzeugten Ausgangssignals 10 eine Ansteuerung im Bereich des Stellorgans 13 möglich ist. Dabei erfolgt eine "Rückkopplung" auf die Neigung gemäß Pfeil N⁻, derart, dass die Förderbaugruppe 8' um einen Schwenkweg gemäß Pfeil W in die Normalstellung gemäß Ebene N verlagert wird.

Prinzipiell ist denkbar, dass die Legemaschine 1,1' (Fig. 5 bzw. Fig. 10) mit mehreren Neigungsmessern 16 und/oder Stellorganen 13 versehen ist. In jedem Fall sieht das Konzept vor, dass mit der den Neigungsmesser 16 und das zumindest eine Stellorgan 13 aufweisenden Regelungseinheit R die Vereinzelungszuführung und - förderung der Knollen 5 im Bereich der Förderbaugruppe 8, 8' beeinflussbar ist. Dabei ist vorgesehen, dass mit dem Neigungsmesser 16 sowohl in Arbeitsrichtung A der Maschine 1 als auch quer zu dieser auftretende Abweichungen von einer Bezugsgröße, vorzugsweise deren horizontalen Winkellage N, erfassbar und ggf. korrigierbar sind.

In Fig. 5 ist mit 16' ein zweiter Sensor dargestellt, mit dem durch optische Aufnehmer, Ultraschall, Laser o. dgl. die Anwesenheit und/oder der Abstand der Knollen 5 (Abstand T) erfassbar ist/sind. Mit dieser Kontrollinformation kann ausgehend von der Regeleinheit R entsprechend der gezählten Anzahl der Knollen 5 die Geschwindigkeit des Legevorgangs variiert werden, wobei entsprechende Fördertrums 17, 17' der Baugruppe 8' ansteuerbar sind. Ebenso ist mittels einer Nachfülleinheit 4' eine Belegung von Fehlstellen mit Knollen 5' durchführbar.

Die Funktion der Legemaschine 1' mit dem Bandförderer im Bereich der Förderbaugruppe 8' ergibt sich aus der Fig. 5, in der die horizontale Ausrichtung des Bandförderers bzw. eines an diesem vorgesehenen bodennahen Fördertrums 17 deutlich wird. Die Regelungseinheit R weist hier einen insgesamt mit 21 bezeichneten und als das Stellorgan 13 wirkenden Hydraulikantrieb, auf, dessen Hydraulikzylinder 22 mittels des Motors M antreibbar ist. Der im Bereich des Maschinengestells 2 gehaltene Hydraulikzylinder 22 erfasst mit seiner Druckstange 23 das Fördertrum 17 und dieses ist andererseits um eine rahmenseitige Stützachse 24 schwenkbar so gehalten, dass das Fördertrum 17 ausgehend von der Normallage N in jeweilige Stellrichtungen W' (Fig. 5) und W" (Fig. 4) verlagerbar ist. Damit können die jeweiligen Schrägstellungen der Maschine 1 als Folge sich bodenseitig verändernder Arbeitslage ausgeglichen werden (Stellbewegung gemäß Pfeil S, Fig. 5) und die Knollen 5 in zuverlässiger Einzellage mit entsprechendem Transportabstand T in die Auswurfzone gelangen und in Förderrichtung Z in die Furche F eingelegt werden.

Auch bei der Ausführung der Legemaschine 1 gemäß Fig. 6 bis 11 wird durch mehrere Stellphasen deutlich, dass der zumindest eine Neigungssensor 16 zur Erfassung der jeweiligen Funktionslage der gesamten Legemaschine 1 vorgesehen ist. Entsprechend der erfassten Abweichung (Fig. 7, Fig. 9) ist mit dem ansteuerbaren Stellorgan zumindest die Förderbaugruppe 8 der Vereinzelungsvorrichtung 6 beeinflussbar. Aus der Zusammenschau von Fig. 6 bis 10 wird deutlich, dass die Förderbaugruppe 8 in einfachster Variante relativ zum Maschinenrahmen 2 verstellbar sein kann. Bei dieser Ausführung der Legemaschine 1 mit dem Becherförderer 8 wird eine Anpassung an die jeweilige Neigung N⁻ bzw. N⁺ der Arbeitsfläche B' bzw. B" dadurch erreicht, dass entsprechend dem Ausgangssignal des Neigungssensors 16 eine vertikale Ausrichtung (Ebene D) des Becherförderers 8 durch eine Schwenkung in Pfeilrichtung U bzw. U' erfolgt (Fig. 7, Fig. 9).

Bei dieser Ausführung gemäß Fig. 6 bis Fig. 12 mit dem Becherförderer 8 wird ein zwischen Zugfahrzeug C und angekoppelter Maschine 1 vorgesehener Hydraulikzylinder 18 als Stellorgan genutzt. Dieser Hydraulikzylinder 18 greift mittels einer Tragbaugruppe 19 (Fig. 11) am Maschinenrahmen 2 an, so dass das System des Becherförderers 8 bzw. die gesamte Vereinzelungsvorrichtung 6 um eine zum Angriffspunkt P des Hydraulikzylinders 18 beabstandete Stützachse 20 schwenkbar ist. Ausgehend von der horizontalen Normallage N der Maschine 1 gemäß Fig. 10 bzw. 11 wird mit Blick auf Fig. 7 und 9 die jeweilige ausgleichende Stellbewegung gemäß Pfeil H' bzw. H" des in einer Ebene G wirksamen Hydraulikzylinders 18 deutlich. Dessen durch die Regelungseinheit R aktivierter Druckantrieb (Motor M', Fig. 11) wird zur Ausrichtung der Maschine 1 entsprechend der vertikalen Hochachse D genutzt.

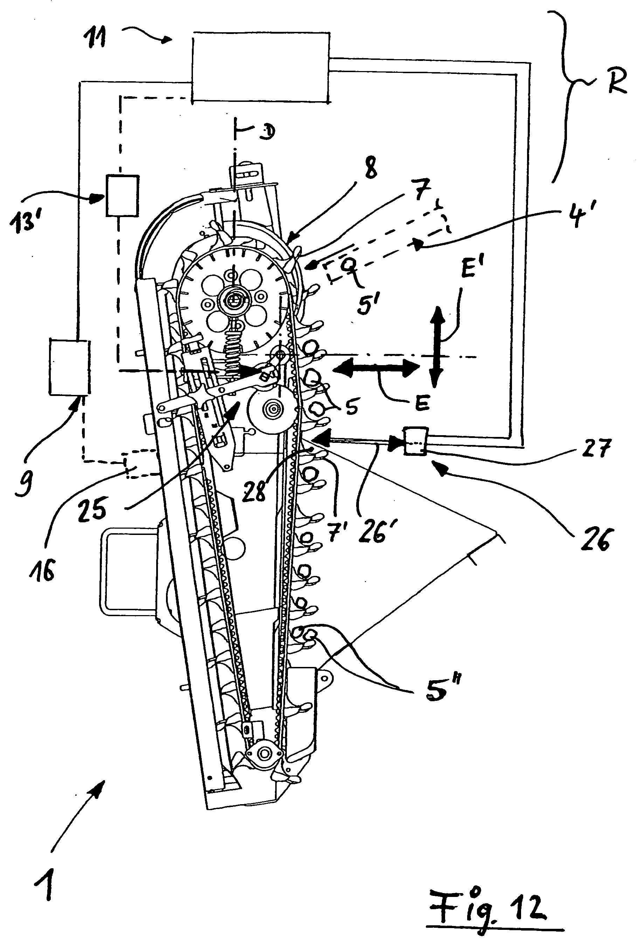

In Fig. 12 ist (ohne sämtliche schon angesprochenen Bauteile nochmals zu erwähnen) eine erweiterte Ausführung der Legemaschine 1 mit dem Becherförderer 8 dargestellt, wobei entsprechend dem Ausgangssignal des (Neigungs)Sensors 9 bzw. des Steuergerätes 11 die jeweiligen becherförmigen Austragelemente 7 mittels eines auf diese einwirkenden Stellorgans 13' beeinflussbar sind (Bewegungsrichtungen gemäß Pfeil E, E'). In denkbar einfacher Ausführung ist dabei vorgesehen, dass das Stellorgan 13' im Bereich einer mit dem Becherförderer 8 zusammenwirkenden Rüttelvorrichtung 25 vorgesehen ist. Dabei kann diese Rüttelvorrichtung 25 nach Art des Stellorgans 13 so genutzt werden, dass durch entsprechende Schwingfrequenzen und/oder Schwingwege die veränderbaren Stellparameter gemäß Pfeil E und/oder E' wirksam sind. Damit kann sichergestellt werden, dass beim Entnahmevorgang jeweils nur eine der Knollen 5 auf dem Austragelement 7 verbleibt.

In weiterer konstruktiver Auslegung der vorbeschriebenen Regelungseinheiten R im Bereich der Legemaschine 1, 1' ist denkbar, indirekte Messwertgeber an Stelle oder gemeinsam mit dem direkten Neigungssensor 16 in die jeweilige Regelungsstrecke R zu integrieren. Mit dem indirekten Messwertgeber (nicht dargestellt) können beispielsweise die vorbeschriebenen Abweichungen aus der horizontalen Soll-Lage N durch einen Biegebalken o. dgl. Deformationsteil indirekt aufgenommen, in ein elektrisches Signal gewandelt und danach im Bereich der Regelungseinheit R verarbeitet werden. Für diesen Regelungsvorgang kann die Regelungseinheit R beispielsweise mit Dehnungsmessstreifen, kapazitiven Gebern, induktiven Gebern o. dgl. elektronischen Baugruppen versehen sein.

In Fig. 12 ist mit 26 eine weitere denkbare Geber-Baugruppe im Bereich der Regelungseinheit R dargestellt, wobei hier ein Ultraschall-, Optoelektronik- und/oder Laser-Sensor 27 als direkt auf den Bereich des Austragelementes 7 gerichtete Überwachungsbaugruppe vorgesehen ist (Pfeil 26'). Damit kann insbesondere eine Anwesenheitskontrolle und/oder Anzahlerfassung in den Bechern 7 erfolgen und in der Regelungseinheit R verarbeitet werden. Bei Detektierung einer Leerstelle 28 oder einer Mehrfachbelegung 5" im Bereich eines der Becher 7' kann mittels der Regelungseinheit R eine (ähnlich Fig. 5) wirksame Nachfülleinheit 4' aktiviert (Zufuhr einer Knolle 5') oder durch den Rüttler 25 eine der überzähligen Knollen 5" durch intensivere Schwingungen (Pfeil E oder E') entfernt werden.

Das erfindungsgemäße Konzept der automatischen Überwachung und Regelung der Legemaschine 1, 1' ist darauf gerichtet, dass entsprechend der Ausführung der jeweiligen Baugruppen im Bereich der Sensoren 9, 26 und den Steuer- bzw. Speichergeräten ein sich selbst optimierendes System gebildet werden kann. In diesen können nach Art einer adaptiven Regelung auch jeweilige zusätzliche Hilfsfunktionen, beispielsweise die vorbeschriebenen internen Belegungen von Fehlstellen auf den Förderbaugruppen 8 bzw. 8', ohne Eingreifen der Bedienperson im Fahrzeug C aktiviert werden, so dass damit ein weitgehend fehlerfrei und ohne Unterbrechung durchführbarer Verlegevorgang möglich wird.

## Patentansprüche

1. Legemaschine für Kartoffeln, mit einem insbesondere von einem Zugfahrzeug (C) im Bereich einer Anhängevorrichtung (3) erfassbaren Maschinenrahmen (2), an dem für einen zumindest einreihigen Legevorgang eine mit einem oberen Vorratsbehälter (4) für Knollen (5) zusammenwirkende Vereinzelungsvorrichtung (6) gehalten ist, wobei mittels einer umlaufende Bänder, Becher o. dgl. Austragelemente (7) aufweisenden Förderbaugruppe (8, 8') jeweilige Knollen (5) im Vorratsbehälter (4) erfassbar und einzeln einer im Ackerboden (B) geformten Furche (F) zuführbar sind, wobei die Legemaschine (1) zumindest einen elektronischen Messwertgeber (16) aufweist und mittels dessen Ausgangssignal (10) zumindest ein Stellorgan (13) im Bereich des Legevorgangs ansteuerbar ist, wobei die Legemaschine (1,1') im Bereich der Austragelemente (7) mit zumindest einer zur Anwesenheitskontrolle und/oder Anzahlerfassung von Knollen (5) nutzbaren Geber-Baugruppe (16'; 26) versehen ist, diese mit einer die Vereinzelungszuführung und -förderung der Knollen (5) beeinflussenden Regelungseinheit (R) zusammenwirkt und mittels deren Ausgangssignal zumindest das eine Stellorgan (13,13') aktivierbar ist, **dadurch gekennzeichnet, dass** die Geber-Baugruppe (16'; 26) bei Ausbildung der Förderbaugruppe mit einem Bandförderer (8') dessen, das horizontale Fördertrum (17) erfassenden Hydraulikzylinder (22), oder bei Ausbildung der Förderbaugruppe mit einem Becherförderer, (8) dessen Rüttelvorrichtung (25) zugeordnet ist.

2. Legemaschine nach Anspruch 1, **dadurch gekennzeichnet, dass** im Bereich der Regelungseinheit (R) mehrere zur kontinuierlichen Überwachung der Aufnahme- und/oder Verlegeparameter zuschattbare Sensoren (9, 26) mit Geber-Baugruppen (14, 16', 26) vorgesehen sind, die über ein Steuergerät (11) mit dem zumindest einen mittels dessen elektronischen Ausgangssignals (12) betätigbaren Stellorgan (13) zusammenwirken, derart, dass mittels der Regelungseinheit (R) bzw. dern(n) Stellorgan(en) (13) mehrere für den Aufnahme- und Verlegevorgang vorgebbare Soll-Zustände bzw. -Parameter der Maschine (1, 1') und/oder einzelner Baugruppen (6,17) automatisch korrigierbar sind.

3. Legemaschine nach Anspruch 1 oder 2, **dadurch gekennzeichnet, dass** die Geber-Baugruppe (16'; 26) mit einer am Vorratsbehälter (4) vorgesehenen Nachfülleinheit (4') verbunden ist.

4. Legemaschine nach einem der Ansprüche 1 bis 3, **dadurch gekennzeichnet, dass** zumindest die die Knollen (5) aufnehmende Förderbaugruppe (8, 8') mittels der Regelungseinheit (R) bei sich ändernden Aufnahme- und/oder Verlegeparametem (N', N") weitgehend automatisch auf deren Sollzustand (N) bzw. Sollzustände einstellbar ist.

5. Legemaschine nach einem der Ansprüche 1 bis 4, **dadurch gekennzeichnet, dass** jeweilige elektronische Ausgangssignale (10) von Messwertgebern (14, 16', 26) mittels eines programmierbaren Speichers (15) in der Regelungseinheit (R) bzw. deren Steuergerät (11) verarbeitbar sind.

6. Legemaschine nach einem der Ansprüche 1 bis 3, **dadurch gekennzeichnet, dass** die Regelungseinheit (R) einen Neigungsmesser (16), den zweiten Sensor (26) und das zumindest eine Stellorgan (13, 13') aufweist.

7. Legemaschine nach einem der Ansprüche 1 bis 6, **dadurch gekennzeichnet, dass** deren (1) Anbaulage am Zugfahrzeug (C) veränderbar ist, wobei entsprechend den Ausgangssignalen (10) der Sensoren (9, 26) eine horizontale Ausrichtung (N) des Bandförderers (8') bzw. eine vertikale Ausrichtung (D) des Becherförderers (8) mittels des Stellorgans (13) erfolgt.

8. Legemaschine nach einem der Ansprüche 1 bis 7, **dadurch gekennzeichnet, dass** das mit der Regelungseinheit (R) zusammenwirkende Stellorgan (13) einen hydraulischen Antrieb (M, M') in Form eines Hydraulikzylinders (18, 22) aufweist.

9. Legemaschine nach Anspruch 7 oder 8, **dadurch gekennzeichnet, dass** bei deren (1) Ausbildung mit dem Bandförderer (8') der zumindest dessen bodennahes Fördertrum (17) erfassende Hydraulikzylinder (22) vorgesehen ist, mittels dem das erfasste Fördertrum (17) um eine rahmenseitige Stützachse (24) schwenkbar ist.

10. Legemaschine nach Anspruch 7 oder 8, **dadurch gekennzeichnet, dass** bei deren (1) Ausführung mit dem Becherförderer (8) ein sich zwischen Zugfahrzeug (C) und angekoppelter Maschine (1) erstreckender Hydraulikzylinder (18) als Stellorgan (13) nutzbar ist.

11. Legemaschine nach Anspruch 10, **dadurch gekennzeichnet, dass** der Hydraulikzylinder (18) mittels einer Tragbaugruppe (19) am Maschinenrahmen (2) angreift und damit das System des Becherförderers (8) um eine zum Angriffspunkt (P) beabstandete Stützachse (20) schwenkbar ist.

12. Legemaschine nach einem der Ansprüche 1 bis 11, **dadurch gekennzeichnet, dass** bei der Ausbildung der Maschine (1) mit dem Becherförderer (8) entsprechend dem Ausgangssignal (10) der Sensoren (9, 26) bzw. des Steuergerätes (11) die jeweiligen becherförmigen Austragelemente (7) mittels eines auf diese einwirkenden Stellorgans (13') beeinflussbar sind.

13. Legemaschine nach Anspruch 12, **dadurch gekennzeichnet, dass** der zweite Sensor (26) bzw. das Stellorgan (13') im Bereich der mit dem Becherförderer (8) zusammenwirkenden Rüttelvorrichtung (25) vorgesehen ist.

14. Legemaschine nach Anspruch 12 oder 13, **dadurch gekennzeichnet, dass** die in ihrer Schwingfrequenz und/oder dem Schwingweg veränderbare Rüttelvorrichtung (25) nach Art des Stellorgans wirksame Stellparameter (E, E') aufweist, die mittels einer als Sensor vorgesehenen Überwachungsbaugruppe (26') veränderbar sind.

15. Legemaschine nach einem der Ansprüche 1 bis 14, **dadurch gekennzeichnet, dass** an dieser (1) eine Regelungseinheit (R) mit einem indirekten Messwertgeber versehen ist.

16. Legemaschine nach Anspruch 15, **dadurch gekennzeichnet, dass** mit dem indirekten Messwertgeber durch einen Biegebalken o. dgl. Deformationsteil aufgenommene Abweichungen aus der horizontalen Soll-Lage erfassbar sind, wobei die Regelungseinheit (R) mit Dehnungsmessstreifen, kapazitiven Gebern, induktiven Gebern o. dgl. elektronischen Sensoren zusammenwirkt.

17. Legemaschine nach Anspruch 15, **dadurch gekennzeichnet, dass** die Regelungseinheit (R) mit Ultraschall-, Optoelektronik- und/oder Laser-Sensoren (26) zusammenwirkt, mit denen Anwesenheits-, Abwesenheits-, Abstands- o. dgl. Zustandsinformationen erzeugbar sind.

18. Legemaschine nach einem der Ansprüche 1 bis 17, **dadurch gekennzeichnet, dass** die Regelungseinheit (R) nach Art einer adaptiven Regelung ein sich selbst optimierendes System bildet.

## Claims

1. Planting machine for potatoes, comprising a machine frame (2) which can be held in particular by a towing vehicle (C) in the region of a towbar (3) and on which a separation device (6) is retained which interacts with an upper storage container (4) for tubers (5) for an at least single-furrow planting process, it being possible for respective tubers (5) to be picked up in the storage container (4) by means of a conveyor module (8, 8') comprising rotating belts, buckets or similar discharging elements (7) and to be individually fed to a furrow (F) made in the soil (B), the planting machine (1) comprising at least one electronic transducer (16) and, by means of the output signal (10) therefrom, at least one actuator (13) can be actuated in the range of the planting process, the planting machine (1, 1') being provided, in the region of the discharging elements (7), with at least one transducer module (16', 26) which can be used to check the presence and/or detect the number of tubers (5), said module interacting with a regulating unit (R) which influences the separating feed and conveyance of the tubers (5) and at least one actuator (13, 13') being activatable by means of the output signal from said regulating unit, **characterised in that**, when the conveyor module comprises a belt conveyor (8'), the transducer module (16'; 26) is assigned to the hydraulic cylinder (22) of said belt conveyor which grips the horizontal conveyor compartment (17), or when the conveyor module comprises a bucket conveyor (8), the transducer module is assigned to the shaker (25) of said bucket conveyor.

2. Planting machine according to claim 1, **characterised in that**, in the region of the regulating unit (R), a plurality of sensors (9, 26) are provided with transducer modules (14, 16', 26) and can be activated in order to continuously monitor the receiving parameters and/or planting parameters, which transducer modules interact with the at least one actuator (13) via a control apparatus (11), which actuator can be operated by means of the electronic output signal (12) therefrom, such that a plurality of target states or parameters of the machine (1, 1') and/or of individual modules (6, 17) which can be specified for the receiving and planting process can be automatically corrected by means of the regulating unit (R) or actuator(s) (13).

3. Planting machine according to either claim 1 or claim 2, **characterised in that** the transducer module (16', 26) is connected to a refill unit (4') provided on the storage container (4).

4. Planting machine according to any of claims 1 to 3, **characterised in that** at least the conveyor module (8, 8') receiving the tubers (5) can be largely automatically adjusted to the target state(s) (N) thereof by means of the regulating unit (R) when the receiving and/or planting parameters (N', N") change.

5. Planting machine according to any of claims 1 to 4, **characterised in that** respective electronic output signals (10) from transducers (14, 16', 26) can be processed by means of a programmable memory (15) in the regulating unit (R) or the control apparatus (11) thereof.

6. Planting machine according to any of claims 1 to 3, **characterised in that** the regulating unit (R) comprises an inclinometer (16), the second sensor (26) and the at least one actuator (13, 13').

7. Planting machine according to any of claims 1 to 6, **characterised in that** the location at which said planting machine (1) attaches to the towing vehicle (C) can be altered, the belt conveyor (8') being oriented horizontally (N) and the bucket conveyor (8) being oriented vertically (D) by means of the actuator (13) in accordance with the output signals (10) from the sensors (9, 26).

8. Planting machine according to any of claims 1 to 7, **characterised in that** the actuator (13) which interacts with the regulating unit (R) comprises a hydraulic drive (M, M') in the form of a hydraulic cylinder (18, 22).

9. Planting machine according to either claim 7 or claim 8, **characterised in that**, when said planting machine (1) comprises the belt conveyor (8'), the hydraulic cylinder (22) which at least grips the conveyor compartment (17) of said belt conveyor which is close to the ground is provided, by means of which cylinder the detected conveyor compartment (17) can be pivoted about a frame-side support shaft (24).

10. Planting machine according to either claim 7 or claim 8, **characterised in that**, when said planting machine (1) comprises the bucket conveyor (8), a hydraulic cylinder (18) which extends between the towing vehicle (C) and the coupled machine (1) can be used as the actuator (13).

11. Planting machine according to claim 10, **characterised in that** the hydraulic cylinder (18) acts on the machine frame (2) by means of a bearing module (19) and therefore the system of the bucket conveyor (8) can be pivoted about a support shaft (20) which is spaced from the point (P) of action.

12. Planting machine according to any of claims 1 to 11, **characterised in that**, when the machine (1) comprises the bucket conveyor (8), the respective bucket-shaped discharging elements (7) can be influenced by means of an actuator (13') acting on said elements in accordance with the output signal (10) from the sensors (9, 26) or from the control apparatus (11).

13. Planting machine according to claim 12, **characterised in that** the second sensor (26) or the actuator (13') is provided in the region of the shaker (25), which interacts with the bucket conveyor (8).

14. Planting machine according to either claim 12 or claim 13, **characterised in that** the shaker (25), the oscillation frequency and/or the oscillation path of which can be altered, comprises actuating parameters (E, E') which act as the actuator and can be altered by means of a monitoring module (26') provided in the form of a sensor.

15. Planting machine according to any of claims 1 to 14, **characterised in that** a regulating unit (R) having an indirect transducer is provided on said planting machine (1).

16. Planting machine according to claim 15, **characterised in that** deviations from the horizontal target position which are absorbed by a flexural beam or similar deformation part can be detected by the indirect transducer, the regulating unit (R) interacting with strain gauges, capacitive transducers, inductive transducers or similar electronic sensors.

17. Planting machine according to claim 15, **characterised in that** the regulating unit (R) interacts with ultrasonic, optoelectronic and/or laser sensors (26), by means of which information about presence, absence or distance or similar state information can be generated.

18. Planting machine according to any of claims 1 to 17, **characterised in that** the regulating unit (R) forms a self-optimising system in the form of an adaptive regulating system.

## Revendications

1. Planteuse de pommes de terre, comprenant un châssis de machine (2) pouvant être mis en prise en particulier par un véhicule tracteur (C) au niveau d'un dispositif d'attelage (3) et auquel, pour une opération de plantation à moins une rangée, est maintenu un dispositif de séparation (6) coopérant avec un réservoir de stockage (4) supérieur pour tubercules (5), dans laquelle un ensemble de convoyage (8, 8') présentant des bandes, des godets ou des éléments d'extraction (7) similaires permet de saisir des tubercules (5) respectives dans le réservoir de stockage (4) et de les amener individuellement à un sillon (F) formé dans la terre arable (B), dans laquelle la planteuse (1) présente au moins un transducteur (16) électronique et le signal de sortie (10) de celui-ci permet de piloter au moins un actionneur (13) au niveau de l'opération de plantation, dans laquelle la planteuse (1, 1') est munie au niveau des éléments d'extraction (7) d'au moins un ensemble transmetteur (16' ; 26) utilisable pour le contrôle de présence et/ou le comptage des tubercules (5), ledit ensemble coopérant avec une unité de commande (R) affectant l'alimentation et le convoyage individuel(le) des tubercules (5), et le signal de sortie dudit ensemble permettant d'activer ledit au moins un actionneur (13, 13'), **caractérisée en ce que** l'ensemble transmetteur (16' ; 26), lorsque l'ensemble de convoyage est réalisé par un convoyeur à bande (8'), est attribué au vérin hydraulique (22) de celui-ci mettant en prise le brin (17) horizontal, ou lorsque l'ensemble de convoyage est réalisé par un élévateur à godets (8), est attribué au dispositif à secousses (25) de celui-ci.

2. Planteuse selon la revendication 1, **caractérisée en ce qu'**au niveau de l'unité de commande (R), plusieurs capteurs (9, 26) pouvant être mis en circuit pour une surveillance continue des paramètres de ramassage et/ou de plantation sont munis d'ensembles transmetteurs (14, 16', 26) qui coopèrent par l'intermédiaire d'un contrôleur (11) avec ledit au moins un actionneur (13) pouvant être actionné au moyen du signal de sortie électronique (12) de celui-ci, de telle sorte que l'unité de commande (R) ou le ou les actionneur(s) (13) permet(tent) de corriger automatiquement plusieurs états ou paramètres nominaux de la machine (1, 1') et/ou d'ensembles individuels (6, 17) qui peuvent être spécifiés pour l'opération de ramassage et de plantation.

3. Planteuse selon la revendication 1 ou 2, **caractérisée en ce que** l'ensemble transmetteur (16' ; 26) est relié à une unité de recharge (4') prévue au niveau du réservoir de stockage (4).

4. Planteuse selon l'une quelconque des revendications 1 à 3, **caractérisée en ce qu'**en cas de changement des paramètres de ramassage et/ou de plantation (N', N"), au moins l'ensemble de convoyage (8, 8') ramassant les tubercules (5) peut être réglé de manière largement automatique sur l'état nominal (N) ou les états nominaux de celui-ci au moyen de l'unité de commande (R).

5. Planteuse selon l'une quelconque des revendications 1 à 4, **caractérisée en ce que** des signaux de sortie électroniques (10) respectifs provenant de transducteurs (14, 16', 26) peuvent être traités au moyen d'une mémoire (15) programmable dans l'unité de commande (R) ou son contrôleur (11).

6. Planteuse selon l'une quelconque des revendications 1 à 3, **caractérisée en ce que** l'unité de commande (R) présente un inclinomètre (16), le deuxième capteur (26) et ledit au moins un actionneur (13, 13').

7. Planteuse selon l'une quelconque des revendications 1 à 6, **caractérisée en ce que** sa position de montage sur le véhicule tracteur (C) est variable, dans laquelle selon les signaux de sortie (10) des capteurs (9, 26), un alignement horizontal (N) du convoyeur à bande (8') ou un alignement vertical (D) de l'élévateur à godets (8) est effectué au moyen de l'actionneur (13).

8. Planteuse selon l'une quelconque des revendications 1 à 7, **caractérisée en ce que** l'actionneur (13) coopérant avec l'unité de commande (R) présente un entraînement hydraulique (M, M') sous la forme d'un vérin hydraulique (18, 22).

9. Planteuse selon la revendication 7 ou 8, **caractérisée en ce que** dans la réalisation de celle-ci (1) avec le convoyeur à bande (8'), le vérin hydraulique (22) saisissant au moins le brin (17) près du sol de celui-ci est prévu, au moyen duquel le brin (17) saisi peut être amené à pivoter autour d'un axe de support (24) côté châssis.

10. Planteuse selon la revendication 7 ou 8, **caractérisée en ce que** dans la réalisation de celle-ci (1) avec l'élévateur à godets (8), un vérin hydraulique (18) s'étendant entre le véhicule tracteur (C) et la machine (1) attelée peut être utilisé comme l'actionneur (13).

11. Planteuse selon la revendication 10, **caractérisée en ce que** le vérin hydraulique (18) s'applique au châssis de machine (2) au moyen d'un ensemble de support et le système de l'élévateur à godets (8) est ainsi pivotant autour d'un axe d'appui (20) espacé par rapport au point d'application (P).

12. Planteuse selon l'une quelconque des revendications 1 à 11, **caractérisée en ce que** dans la réalisation de la machine (1) avec l'élévateur à godets (8), selon le signal de sortie (10) des capteurs (9, 26) ou du contrôleur (11), les éléments d'extraction (7) en forme de godets respectifs peuvent être affectés au moyen d'un actionneur (13') agissant sur ceux-ci.

13. Planteuse selon la revendication 12, **caractérisée en ce que** le deuxième capteur (26) ou l'actionneur (13') est prévu au niveau du dispositif à secousses (25) coopérant avec l'élévateur à godets (8).

14. Planteuse selon la revendication 12 ou 13, **caractérisée en ce que** le dispositif à secousses (25) variable en fréquence et/ou amplitude d'oscillation présente des paramètres de réglage (E, E') agissant à la manière de l'actionneur et qui peuvent être modifiés au moyen d'un ensemble de surveillance (26') prévu en tant que capteur.

15. Planteuse selon l'une quelconque des revendications 1 à 14, **caractérisée en ce qu'**une unité de commande (R) avec un transducteur indirect est prévu sur celle-ci (1).

16. Planteuse selon la revendication 15, **caractérisée en ce que** le transducteur indirect permet de détecter des écarts par rapport à la position horizontale nominale, captés par une barre flexible ou une pièce de déformation similaire, dans laquelle l'unité de commande (R) coopère avec des extensomètres, des transmetteurs capacitifs, des transmetteurs inductifs ou des capteurs électroniques similaires.

17. Planteuse selon la revendication 15, **caractérisée en ce que** l'unité de commande (R) coopère avec des capteurs (26) à ultrason, optoélectroniques et/ou laser qui permettent de produire des informations de présence, d'absence, d'écartement ou d'états similaires.

18. Planteuse selon l'une quelconque des revendications 1 à 17, **caractérisée en ce que** l'unité de commande (R) constitue un système auto-optimisant à la manière d'une commande adaptative.
